Europäisches Patentamt

European Patent Office

Office européen des brevets

(19)

(11) Veröffentlichungsnummer : **0 168 679**
**B1**

(12) **EUROPÄISCHE PATENTSCHRIFT**

(45) Veröffentlichungstag der Patentschrift :
01.02.89

(21) Anmeldenummer : 85107750.3

(22) Anmeldetag : 22.06.85

(51) Int. Cl.⁴ : **G 01 J   5/62**, G 01 J   1/04

(54) **Einrichtung zur Messung der aus dem Halbraum kommenden, elektromagnetischen Strahlung.**

(30) Priorität : 26.06.84 DE 3423494

(43) Veröffentlichungstag der Anmeldung :
22.01.86 Patentblatt 86/04

(45) Bekanntmachung des Hinweises auf die Patenterteilung : 01.02.89 Patentblatt 89/05

(84) Benannte Vertragsstaaten :
AT BE CH DE FR GB IT LI LU NL SE

(56) Entgegenhaltungen :
DE--A-- 2 306 449
DE--B-- 1 573 283
US--A-- 4 322 124

(73) Patentinhaber : Deutsche Forschungs- und Versuchsanstalt für Luft- und Raumfahrt e.V.
Linder Höhe Postfach 90 60 58
D-5000 Köln 90 (DE)

(72) Erfinder : Lorenz, Dieter, Dr.
Nordstrasse 21
D-8126 Hohenpeissenberg (DE)

(74) Vertreter : von Kirschbaum, Albrecht, Dipl.-Ing.
Hermann-Ehlers-Strasse 21a
D-8034 Germering (DE)

## Beschreibung

Die Erfindung betrifft eine Einrichtung zur Messung der aus dem Halbraum (entsprechend einem Raumwinkel von 2π) kommenden, elektromagnetischen Strahlung nach dem Oberbegriff des Anspruchs 1.

Unter anderem werden im Bereich der Meteorologie Messungen der solaren und der terrestrischen Strahlung in einem Wellenlängenbereich von etwa 0,3 μm bis 3 μm bzw. von 3 μm bis 100 μm durchgeführt, um beispielsweise die Strahlungsbilanz, d. h. die Differenz zwischen der auf die Oberfläche auftreffenden und der von dieser ausgehenden bzw. reflektierten Strahlung, und deren Komponenten zu bestimmen. Hierzu muß die aus dem gesamten oberen und unteren Halbraum (mit jeweils einem Raumwinkel 2π) kommende Strahlung erfaßt und gemessen werden. Solche Messungen werden heutzutage nicht nur stationär, sondern in zunehmendem Maße auch von Luft- und Raumfahrzeugen aus durchgeführt.

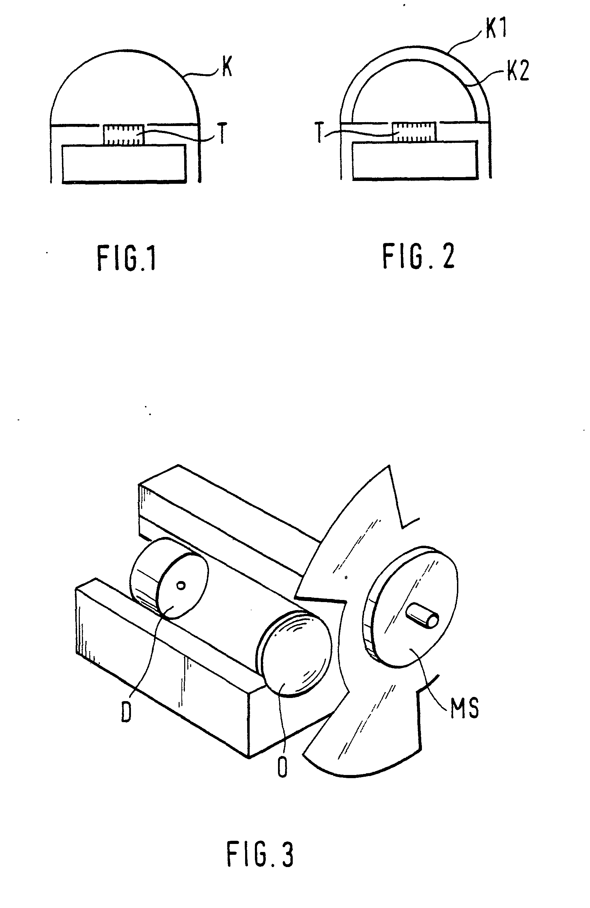

Für solche Messungen sind bereits zahlreiche Geräte entwickelt worden. Solche Geräte weisen beispielsweise, wie in Fig. 1 und 2 schematisch angedeutet ist, eine Thermosäule T auf, deren horizontal angeordnete, aktive Lötstellen geschwärzt und gegenüber den übrigen Teilen des Geräts isoliert angeordnet sind. Bei einem Strahlungseinfall erhöht sich die Temperatur der aktiven Lötstellen gegenüber der Temperatur der passiven Lötstellen, die mit einer verhältnismäßig großen Masse des Geräts thermisch verbunden sind. Die entstehende Thermospannung ist, gegebenenfalls zusammen mit anderen Meßgrößen, wie beispielsweise der Temperatur der passiven Lötstellen, ein Maß für die auftreffende Strahlung.

Zur Vermeidung eines advektiven und eines konvektiven Wärmeaustausches mit der umgebenden Luft ist die Thermosäule T im allgemeinen durch eine sogenannte Windschutz-Kalotte K geschützt, die aus einem Material hergestellt ist, welches für die zu messende Strahlung durchlässig ist, wie beispielsweise Glas, Polyäthylen, u. ä..

Aus der US-PS 4 322 124 ist ein Infrarotsensor mit einem flachen PbS-Detektorelement und mit einer darüber angeordneten negativen Meniskuslinse bekannt, wodurch ein großes Gesichtsfeld von über 180° erreicht ist.

Um bezüglich eines Wärmeaustausches eine noch bessere Abschirmung zu erreichen, sind um die Thermosäule T bei einer anderen herkömmlichen Ausführung zwei halbkugelförmige Kalotten K1 und K2 angeordnet, die ebenfalls aus einem Material hergestellt sind, welches bezüglich der zu messenden Strahlung durchlässig ist.

Bei derartigen mit Gleichlicht arbeitenden Geräten ist neben einer verhältnismäßig großen Trägheit, die sich beispielsweise beim Flugzeug-Einsatz bemerkbar macht, vor allem nachteilig, daß Temperaturänderungen des Geräts selbst und insbesondere Temperaturänderungen der im allgemeinen nicht völlig transparenten Kalotten das Meßsignal stark beeinflussen können. Um diesen Einfluß bis zu einem gewissen Grad zu mindern, sind beispielsweise die beiden in Fig. 2 dargestellten konzentrischen Kalotten K1 und K2 angebracht worden.

Die Nachteile dieser herkömmlichen Geräte aufgrund ihrer Trägheit und einem Temperatureinfluß von Gehäuse und Kalotte könnten durch die Anwendung eines sogenannten Wechsellicht-Verfahrens beseitigt werden. Dieses Verfahren ist an sich Stand der Technik, konnte jedoch für Strahlungsmessungen aus dem Halbraum mit einem Raumwinkel von 2π bisher nicht angewendet werden, sondern es ist nur bei Geräten mit einem begrenzten Öffnungswinkel eingesetzt worden.

Bei dem herkömmlichen Wechsellicht-Verfahren wird, wie in Fig. 3 schematisch dargestellt ist, ein Strahlungsdetektor D, der eine hohe Empfindlichkeit und eine sehr geringe Trägheit aufweist, wie beispielsweise ein Halbleiter-Bolometer, ein Photoelement oder ein pyroelektrischer Detektor, hinter einer schwingenden oder rotierenden Modulatorscheibe MS angebracht, die dann wechselweise den Detektor D für die zu messende Strahlung freigibt oder ihn abdeckt. In der in Fig. 3 dargestellten Ausführungsform ist vor dem Detektor zur Bündelung der Strahlung eine Linsenanordnung O vorgesehen.

Ferner ist aus der DE-OS 23 06 449 ein Radiometer mit einem Strahlungsdetektor und mit Zerhackerblenden bekannt. Bei diesen herkömmlichen Ausführungsformen wird dann an dem jeweiligen Strahlungsdetektor, beispielsweise dem Detektor D nach Fig. 3, eine Wechselspannung oder ein Wechselstrom in nachgeschalteten Meßeinrichtungen erzeugt, um auf diese Weise mit Hilfe des Wechsellichtsverfahrens die Messung durchführen zu können.

Ferner ist aus der DE-AS 1 573 283 ein Radiometer bekannt, dessen Gehäuse-Innenwand mit einer Schwarzkörper-Bezugsfläche versehen ist, und dessen Strahlungsdetektorelement an dem einen Ende des Gehäuses zum Empfang von durch dieses einfallende Strahlen angeordnet ist. Ferner besitzt ein über das entgegengesetzte Ende des Gehäuses bewegbarer Unterbrecher eine konkave, drehbar gehaltene Reflexionsfläche zur Reflexion der von der Schwarzkörper-Bezugsfläche ausgesandten Strahlung. Weiterhin sind neben der konkaven Reflexionsfläche noch den Strahlengang beeinflussende Vorrichtungen vorgesehen, welche die Strahlen derart fokussieren, daß bei verdeckter Öffnung praktisch nur die von der Schwarzkörper-Bezugsfläche ausgehende Strahlung auf den Strahlungsdetektor fällt.

Der Vorteil dieser Methoden besteht darin, daß Emissionsänderungen innerhalb des Systems, nämlich am Detektor, Gehäuse, Fenster oder der Optik, welche beispielsweise durch Temperaturänderungen hervorgerufen werden, sich in gleicher Weise auf Meß- und Vergleichsstrahlung auswirken und demzufolge der Wechselspannung oder dem Wechselstrom nicht aufgeprägt werden. Nachteilig ist, daß die beispielsweise von einer Modulatorscheibe bzw. von Zerhackerblenden emittierte und/oder reflektierte Strahlung bekannt sein muß, da sie das Bezugssignal (das Nullsignal) darstellt.

Bei Anwendung beispielsweise der in Fig. 3 dargestellten Modulatorscheibe oder von Zerhackerflügeln (nach der DE-OS 23 06 449) kommt es darüber hinaus unmittelbar über einem in einer Ebene angeordneten Detektor zu Advektions- und Konvektionseinflüssen, was unvermeidlich ist und was aufgrund der parallelen Anordnung einer Modulatorscheibe bzw. von Zerhackerflügeln über den Detektoren nicht ausgeschaltet werden kann.

Im Hinblick auf diese Erkenntnisse und Nachteile der aus dem Stand der Technik bekannten Meßeinrichtungen ist es daher Aufgabe der Erfindung, eine Einrichtung zur Messung elektromagnetischer Strahlung zu schaffen, mit welcher die aus dem Halbraum entsprechend einem Raumwinkel von $2\pi$ kommende elektromagnetische Strahlung sogar bei kleinen Einfallswinkeln mit einer wesentlich höheren Meßgenauigkeit als bisher gemessen werden kann.

Gemäß der Erfindung ist diese Aufgabe durch die Merkmale im kennzeichnenden Teil des Anspruchs 1 gelöst. Vorteilhafte Weiterentwicklungen der erfindungsgemäßen Einrichtung sind in den Unteransprüchen angegeben.

Bei der Einrichtung gemäß der Erfindung zur Strahlungsmessung aus dem einen Raumwinkel von $2\pi$ entsprechenden Halbraum sind zwei gleich- oder verschiedenartig ausgeführte, ineinander angeordnete, kalottensegmentförmige Modulatoren verwendet, welche beispielsweise die in Fig. 1 dargestellte Kalotte umschließen, und die mit gleicher oder unterschiedlicher Geschwindigkeit in gleicher oder gegenläufiger Richtung um die gemeinsame, senkrechte Achse der beiden Modulatoren rotieren. Bei diesem Verfahren sind dann jeweils 50 % des Halbraums abgedeckt, was allerdings in einem ständigen Wechsel erfolgt, so daß im Mittel über mehrere Perioden der gesamte Halbraum erfaßt wird.

Die Modulationsfrequenz kann durch die Wahl der Sektorenform und -anzahl sowie durch die Umdrehungsgeschwindigkeit weitgehend der speziellen Meßaufgabe angepaßt werden ; das gleiche gilt für das Transmissions-, das Emissions- bzw. das Reflexionsvermögen des Modulators. Gemäß einer bevorzugten Ausführungsform der Erfindung weisen die beiden kalottensegmentförmigen Modulatoren ein genau definiertes Transmissions-, Emissions- und/oder Reflexionsvermögen auf, welches vorzugsweise wellenlängenabhängig ist.

Durch die Anwendung des Wechsellicht-Verfahrens zur Messung der aus dem einem Raumwinkel von $2\pi$ entsprechenden Halbraum kommenden, elektromagnetischen Strahlung kann in Verbindung mit der erfindungsgemäßen Einrichtung zur Durchführung dieses Verfahrens eine erheblich höhere Meßgenauigkeit als mit den bisher üblichen, und in großem Umfang angewandten Gleichlichtverfahren erzielt werden. Noch dazu ist die erfindungsgemäße Einrichtung zur Messung der aus dem Halbraum kommenden, elektromagnetischen Strahlung erheblich trägheitsärmer.

Nachfolgend wird die Erfindung anhand einer bevorzugten Ausführungsform unter Bezugnahme auf die anliegenden Zeichnungen im einzelnen erläuter. Es zeigen :

Fig. 1 und 2 schematische Darstellungen von herkömmlichen Strahlungsmeßgeräten mit einer unter mindestens einer Kalotte angeordneten Thermosäule ;

Fig. 3 eine schematische Darstellung einer nach dem Wechsellicht-Verfahren arbeitenden, herkömmlichen Meßanordnung ;

Fig. 4a eine teilweise aufgeschnittene, schematische Darstellung einer bevorzugten Ausführungsform der Erfindung zum Messen der aus dem Halbraum kommenden Strahlung ;

Fig. 4b eine der Fig. 4a entsprechende, in Einzelteile aufgelöste, perspektivische Darstellung ;

Fig. 5 eine schematische senkrechte Schnittansicht durch die Ausführungsform der Fig. 4, und

Fig. 6 im Schnitt schematisch eine Draufsicht auf die Ausführungsform der Fig. 4 entlang einer Linie 6-6 in Fig. 4 und 5.

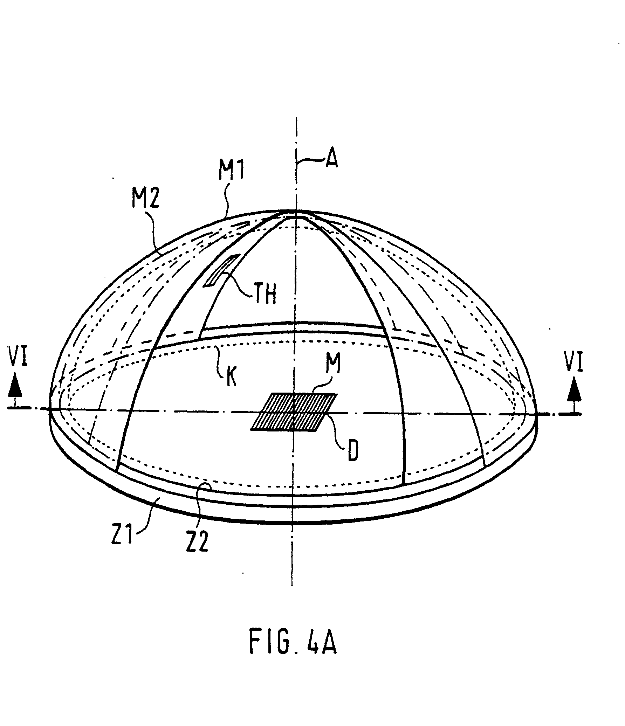

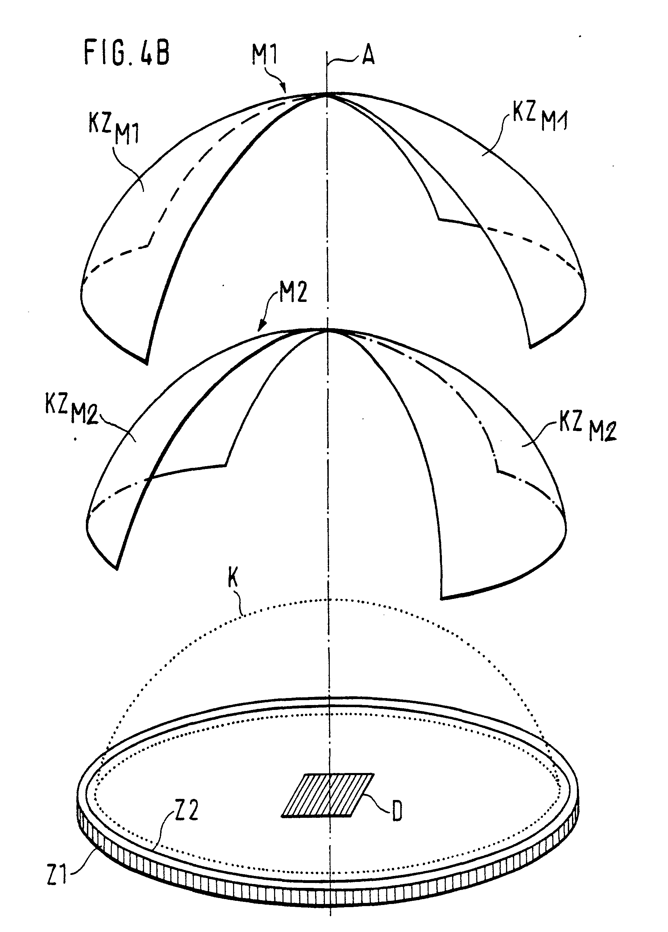

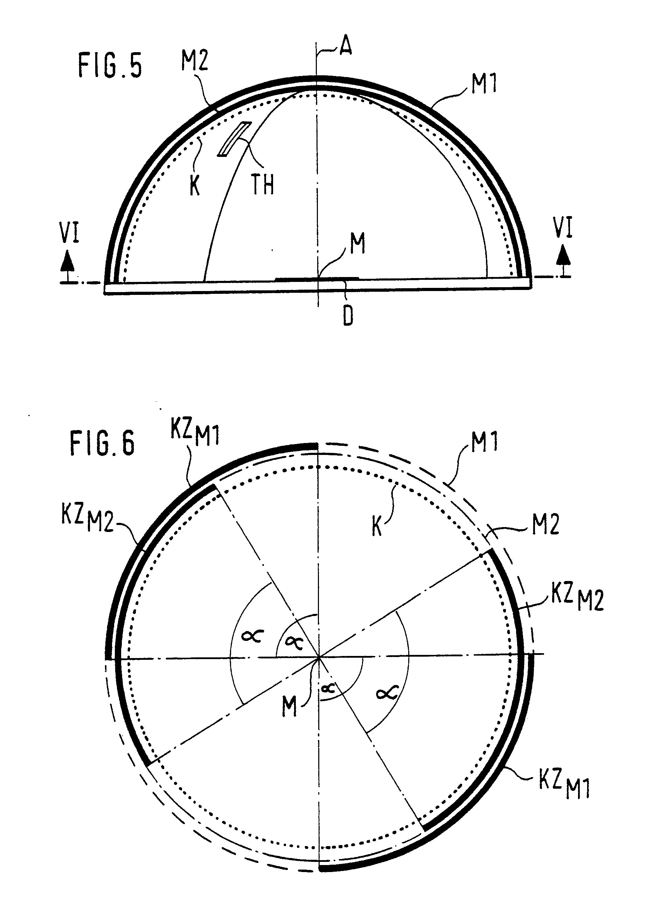

In Fig. 4a und 4b sind eine teilweise aufgeschnittene, schematische Darstellung bzw. eine der Fig. 4a entsprechende, in Einzelteile aufgelöste, perspektivische Darstellung einer bevorzugten Ausführungsform einer Einrichtung zur Durchführung des erfindungsgemäßen Verfahrens dargestellt, welches sich für meteorologische Anwendungen empfiehlt. Zur Verdeutlichung der Anordnung und Zuordnung der einzelnen Teile der bevorzugten Ausführungsform der erfindungsgemäßen Einrichtung ist diese in Fig. 5 in einer schematischen senkrechten Schnittansicht und in Fig. 6 im Schnitt schematisch in einer Draufsicht wiedergegeben.

Unter der strahlungsdurchlässigen Kalotte K sind ein oder mehrere trägheitsarme, hochempfindliche Detektoren D, beispielsweise Bolometer vorzugsweise symmetrisch bezüglich des Kalottenmittelpunkts M angeordnet. Die Kalotte K wird von zwei gleichförmig ausgeführte ineinander angeordneten Modulatoren M1 und M2 umschlossen, die vorzugsweise als kalottensegmentförmige, flügelähnliche Abschnitte $KZ_{M1}$ und $KZ_{M2}$ ausgebildet sind. Die beiden kalottensegmentförmigen Modulatoren, M1 und M2 sind so angeordnet, daß zumindest ein Modulator um ihre gemeinsame, senkrechte Achse A rotiert. Vorzugsweise werden die beiden, kalottensegmentförmigen Modulatoren M1 und M2 jedoch so angetrieben, daß sie entweder mit unterschiedlicher Geschwindigkeit in der gleichen Richtung rotieren oder aber sich gegenläufig um die gemeinsame senkrechte Achse A drehen. Hierbei könnte der Antrieb der beiden kalottensegmentförmigen Modulatoren M1 und M2 über nicht näher dargestellte Zahnkränze Z1 und Z2 erfolgen, welche beispielsweise am freien unteren Ende auf der Außenseite des äußeren kalottensegmentförmigen Modulators M1 bzw. am unteren freien Ende auf der Innenseite des inneren, kalottensegmentförmigen Modulators M2 ausgebildet sind. Je nachdem, ob die beiden Modulatoren M1 und M2 in der gleichen Richtung, aber mit unterschiedlichen Geschwindigkeiten, oder aber gegenläufig angetrieben werden sollen, kann die Übertragung der Rotationsbewegung von dem inneren an den äußeren Zahnkranz oder umgekehrt beispielsweise über ein oder mehrere dazwischen vorgesehene Zahnräder erfolgen.

Wie insbesondere aus der im Schnitt schematisch wiedergegebenen Draufsicht in Fig. 6 zu ersehen ist, sind die beiden Modulatoren M1 und M2 beispielsweise jeweils als zwei Abschnitte $KZ_{M1}$ bzw. $KZ_{M2}$ von Kugelzweiecken bzw. von Segmenten von nicht geschlossenen Halbkugeln in der Weise ausgebildet, daß die jeweils zwei Abschnitte $KZ_{M1}$ bzw. $KZ_{M2}$ Abschnitten der Oberflächen von Kugelkeilen entsprechen, welche durch zwei durch den Kugelmittelpunkt M gehende Ebenen gebildet sind, welche sich unter einem Innenwinkel α schneiden, wobei der Winkel in der in Fig. 6 wiedergegebenen Ausführungsform vorzugsweise gleich 90° ist. Die auf den Oberflächen der kalottensegmentförmigen Modulatoren M1 und M2 vorgesehenen Abschnitte $KZ_{M1}$ bzw. $KZ_{M2}$ sind vorzugsweise schwarz ausgelegt.

Die Temperatur der kalottensegmentförmigen Modulatoren M1 und M2 wird durch in sie eingearbeitete, hochohmige Widerstandselemente TH, beispielsweise in Form von Thermistoren gemessen, wobei die elektrische Spannung beispielsweise über Schleifringe abgenommen wird. Diese Temperaturmessung ist ohnehin nur dann erforderlich, wenn in dem thermalen Infrarot-Bereich oberhalb einer Wellenlänge von circa 3 μm gemessen werden soll. Die Temperatur der schwarzen Abschnitte $KZ_{M1}$ und $KZ_{M2}$ der beiden Modulatoren M1 und M2 spielt dagegen bei Messungen unterhalb einer Wellenlänge von 3 μm keine wesentliche Rolle. Für eine Strahlung mit einer Wellenlänge oberhalb von 3 μm können die Modulatoren M1 und M2 beispielsweise aus Glas hergestellt sein, welches für eine Strahlung mit einer Wellenlänge oberhalb von 3 μm undurchlässig ist, während die Kalotte aus einem Material besteht, das oberhalb einer Wellenlänge von 3 μm durchlässig und auch unterhalb einer Wellenlänge von 3 μm durchlässig sein kann. Auf diese Weise wird infolge der Modulation nur die Strahlung oberhalb einer Wellenlänge von 3 μm erfaßt.

Gemäß einer bevorzugten Ausführungsform kann der Raum unter der Kalotte K, d. h. der Raum, in welchem der hochempfindliche, trägheitsarme Detektor D angeordnet ist, beispielsweise gasdicht abgeschlossen sein und mit einem Gas gefüllt werden, das sich für die Messungen in dem jeweiligen Wellenlängenbereich, d. h. in einem Wellenlängenbereich oberhalb und unterhalb von 3 μm, besonders eignet.

## Patentansprüche

1. Einrichtung zur Messung der aus dem Halbraum (entsprechend einem Raumwinkel 2π) kommenden elektromagnetischen Strahlung, mit Hilfe eines unter einer strahlungsdurchlässigen Kalotte angeordneten, trägheitsarmen, hochempfindlichen Detektors, dadurch gekennzeichnet, daß über der strahlungsdurchlässigen Kalotte (K), unter welcher mindestens der eine trägheitsarme, hochempfindliche Detektor (D) untergebracht ist, zwei gleich- oder verschiedenartig ausgebildete, ineinander angeordnete, kalottensegmentförmige Modulatoren (M1, M2) vorgesehen sind, die mit unterschiedlicher Geschwindigkeit in gleicher oder gegenläufiger Richtung um die gemeinsame senkrechte Achse (A) der beiden Modulatoren (M1, M2) rotieren.

2. Einrichtung nach Anspruch 1, dadurch gekennzeichnet, daß die zwei kalottensegmentförmigen Modulatoren (M1, M2) je zwei gleich große, flügelähnliche Abschnitte ($KZ_{M1}$, $KZ_{M2}$) von diametral auf einer gedachten Kugeloberfläche angeordneten Kugelzweiecken aufweisen, wobei die zwei Abschnitte ($KZ_{M1}$, $KZ_{M2}$) Abschnitten auf den Oberflächen von Kugelkeilen mit jeweils gleichen Innenwinkeln (α= 90°) entsprechen und schwarz ausgebildet sind.

3. Einrichtung nach einem der Ansprüche 1 oder 2, dadurch gekennzeichnet, daß die zwei kalottensegmentförmigen Modulatoren (M1, M2) ein definiertes, vorzugsweise wellenlängenabhängiges Reflexionsvermögen und/oder ein wellenlängenabhängiges Durchlässigkeitsvermögen aufweisen.

4. Einrichtung nach einem der Ansprüche 1 bis 3, dadurch gekennzeichnet, daß die beiden kalottensegmentförmigen Modulatoren (M1, M2) mit einer Einrichtung (TH) zur Messung der Temperatur versehen sind.

5. Einrichtung nach einem der Ansprüche 1 bis 4, dadurch gekennzeichnet, daß der Raum unter der Kalotte (K), in welchem der hochempfindliche, trägheitsarme Detektor (D) angeordnet ist, beispielsweise gasdicht ausgeführt ist.

## Claims

1. Equipment for the measurement of the electromagnetic radiation coming from the half-space (corresponding to a solid angle of 2 π) with the aid of a highly sensitive detector of low inertia arranged under a radiation-permeable dome (K), characterised thereby, that above the radiation-permeable dome (K), under which at least the one highly sensitive detector (D) of low inertia is housed, there are provided two identically or differently constructed modulators (M1, M2), which are of dome segment shape, are arranged one inside the other and which rotate at different speed in like or opposite direction about the common vertical axis (A) of both the modulators (M1, M2).

2. Equipment according to claim 1, characterised thereby, that the two modulators (M1, M2) in the shape of dome segments each display two equally large wing-like portions ($KZ_{M1}$, $KZ_{M2}$) of spherical bi-angles arranged diametrally on a national spherical surface, wherein the two portions ($KZ_{M1}$, $KZ_{M2}$) correspond to portions on the surfaces of spherical cones with respectively equal angles ($\alpha = 90°$) and are black.

3. Equipment according to one of the claims 1 or 2, characterised thereby, that the two modulators (M1, M2) in the shape of dome segments display a defined, preferably wavelength-dependent reflectivity and/or a wavelength-dependent permeability.

4. Equipment according to one of the claims 1 to 3, characterised thereby, that both the modulators (M1, M2) in the shape of dome segments are provided with an equipment (TH) for the measurement of the temperature.

5. Equipment according to one of the claims 1 to 4, characterised thereby, that the space below the dome (K), in which the highly sensitive detector (D) of low inertia is arranged, is for example constructed to be gas-tight.

**Revendications**

1. Dispositif de mesure du rayonnement électromagnétique venant de l'espace semi-infini (correspondant à un angle dans l'espace de $2\pi$) à l'aide d'un détecteur de sensibilité élevée et de faible inertie disposé au-dessous d'une calotte transparente au rayonnement, caractérisé en ce que l'on prévoit au-dessus de la calotte (K), qui est transparente au rayonnement et sous laquelle est disposé au moins un détecteur (D) de sensibilité élevée et de faible inertie, deux modulateurs (M1, M2) en forme de segments de calotte, disposés l'un à l'intérieur de l'autre et de constitution similaire ou différente, qui tournent à des vitesses différentes dans le même sens ou en sens contraires autour de l'axe vertical commun (A) des deux modulateurs (M1, M2).

2. Dispositif selon la revendication 1, caractérisé en ce que les deux modulateurs en forme de segments de calotte (M1, M2) comprennent chacun deux sections ($KZ_{M1}$, $KZ_{M2}$) en forme d'aile et de même grandeur de fuseaux disposés diamétralement sur une surface sphérique imaginaire, les deux sections ($KZ_{M1}$, $KZ_{M2}$) correspondant à des sections de surfaces de fuseaux ayant respectivement le même angle interne ($\alpha = 90°$) et étant de couleur noire.

3. Dispositif selon la revendication 1 ou 2, caractérisé en ce que les deux modulateurs en forme de segments de calotte (M1, M2) ont une capacité de réflexion définie et dépendant de préférence de la longueur d'onde et/ou une capacité de transparence dépendant de la longueur d'onde.

4. Dispositif selon l'une quelconque des revendications 1 à 3, caractérisé en ce que les deux modulateurs en forme de segments de calotte (M1, M2) sont munis d'un dispositif (TH) destiné à la mesure de la température.

5. Dispositif selon l'une quelconque des revendications 1 à 4, caractérisé en ce que l'espace situé au-dessous de la calotte (K) et dans lequel est disposé le détecteur (D) de faible inertie et de sensibilité élevée est constitué de façon à être par exemple étanche aux gaz.

FIG.1

FIG.2

FIG.3

1

FIG. 4A

2

FIG.4B

M1

A

KZ$_{M1}$

KZ$_{M1}$

M2

KZ$_{M2}$

KZ$_{M2}$

K

Z2

Z1

D

3

FIG.5

M2

M1

A

K

TH

VI

VI

M

D

FIG.6

KZ$_{M1}$

M1

KZ$_{M2}$

K

M2

KZ$_{M2}$

$\propto$

$\propto$

$\propto$

$\propto$

M

KZ$_{M1}$